# NOUVEAU FASCICULE DE BREVET EUROPEEN

(11) **EP 0 793 870 B2**
(45) Date de publication et mention de la décision concernant l'opposition: **30.06.2004**
(45) Mention de la délivrance du brevet: 15.07.1998
(21) Numéro de dépôt: 95937867.0
(22) Date de dépôt: 06.11.1995
(51) Int. Cl.: H02K 1/14, H02K 3/18, H02K 21/14, H02K 41/03, H02K 3/24

(54) **MOTEUR SYNCHRONE A AIMANTS PERMANENTS**
SYNCHRONMOTOR MIT DAUERMAGNETEN
PERMANENT MAGNET SYNCHRONOUS MOTOR

(30) Priorité: 16.11.1994 FR 9413714
(43) Date de publication de la demande: 10.09.1997
(73) Titulaire: Etel S.A., 2112 Môtiers (CH)
(72) Inventeur: Wavre, Nicolas, 2000 Neuchâtel (CH)
(74) Mandataire: Surmely, Gérard
(86) Numéro de dépôt international: PCT/EP1995/004344
(87) Numéro de publication internationale: WO 1996/015574

(56) Documents cités:
- EP-A- 0 336 042
- DE-A- 1 538 965
- DE-A- 2 339 318
- DE-A- 2 842 195
- DE-A- 3 540 349
- DE-A- 4 133 723
- DE-B- 1 012 681
- DE-B- 1 054 159
- DE-C- 92 958
- DE-C- 249 091
- DE-C- 3 246 596
- FR-A- 2 678 448
- US-A- 2 092 058
- US-A- 2 169 100
- CONFERENCE RECORD OF THE INDUSTRY APPLICATIONS SOCIETY ANNUAL MEETING. (IAS), SAN DIEGO, OCT. 1 - 5, 1989, vol. PART 1, 1 Octobre 1989, INSTITUTE OF ELECTRICAL AND ELECTRONICS ENGINEERS, pages 272-277, XP000091588 TAKEDA Y ET AL: "OPTIMUM TOOTH DESIGN FOR LINEAR PULSE MOTOR"
- IEEE 1993, 28TH. IAS ANNUAL MEETING, 3 Octobre 1993, pages 251-257, XP000427449 U.S. DESHPANDE, J.J.CATHEY, E.RICHTER: "A High Force Dencity Linear Switched Reluctance Machine"
- PATENT ABSTRACTS OF JAPAN vol. 13, no. 567 (M-908) 15 Décembre 1989 & JP,A,01 238 406 (YAMAGUCHI HITOSHI) 22 Septembre 1989
- PATENT ABSTRACTS OF JAPAN vol. 13, no. 307 (E-787) 13 Juillet 1989 & JP,A,01 081 654 (SAITO SHINICHI) 27 Mars 1989
- PATENT ABSTRACTS OF JAPAN vol. 10, no. 289 (E-442) 02 Octobre 1986 & JP,A,61 106 035 (NAGASAKI YASUMASA) 24 Mai 1986
- IEEE Transaction on magnetics, vol. 24, no. 6, Nov 1988, pages 2901 - 2903

## Description

La présente invention est relative à un moteur synchrone comportant un induit comprenant une culasse, une pluralité de dents ayant chacune une première extrémité solidaire de ladite culasse et définissant entre elles des encoches, et des bobines disposées partiellement dans lesdites encoches et agencées de manière à engendrer un flux magnétique dans lesdites dents lorsque ces bobines sont alimentées, lesdites dents ayant chacune une deuxième extrémité opposée à ladite première extrémité et formant une tête de dent ayant une première largeur, et lesdites encoches ayant chacune une deuxième largeur au droit desdites têtes de dents, la somme desdites première et deuxième largeurs définissant un pas dentaire, ledit moteur comportant en outre un inducteur disposé en regard desdites têtes de dents et comprenant une pluralité d'aimants permanents et une semelle de retour de flux sur laquelle sont disposés lesdits aimants permanents.

Un moteur synchrone répondant à la définition générique ci-dessus est connu. Il est illustré dans ce document par les figures 1, 1a, 2 et 3 qui font état de l'art antérieur.

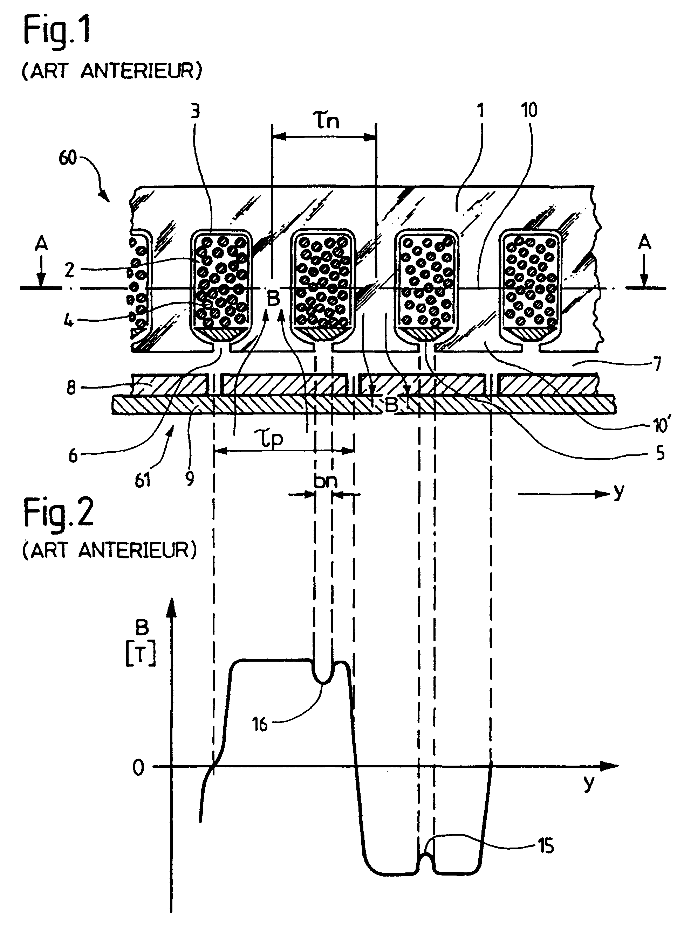

La figure 1 est une coupe partielle dans un moteur synchrone linéaire construit selon cet art antérieur. Ici l'induit 60 est un stator constitué d'un paquet de tôles ferromagnétiques et dont on aperçoit la culasse 1 et les dents 10 disposées régulièrement avec un pas dentaire τn. L'induit 60 comporte encore une pluralité d'encoches 2 séparant les dents 10, et dans lesquelles sont logés des enroulements 4 de bobines, ces enroulements étant isolés de la culasse 1 et des dents 10 par des feuilles isolantes 3. Dans ce type de moteur, les têtes des dents 10 sont terminées par un élargissement ou semelle 10' qui a pour but de créer une ouverture ou pré-encoche 6 de largeur réduite et cela pour des raisons qui apparaîtront ci-dessous. Les enroulements 4 sont généralement bobinés en vrac, sans ordre précis, soit à la machine à bobiner, soit introduits à la main dans les encoches 2 via la pré-encoche 6. Pour maintenir l'enroulement dans l'encoche 2, on dispose une clavette 5 qui s'appuie sur les semelles dentaires 10'.

La figure 1 montre encore l'inducteur 61 du moteur, cet inducteur 61 étant, dans l'exemple choisi ici, la partie mobile du moteur se déplaçant linéairement le long de l'axe y. Cet inducteur 61 comprend essentiellement une pluralité d'aimants permanents 8 en forme de parallélépipèdes rectangles disposés régulièrement, avec un pas polaire τp, sur une semelle 9 de retour de flux plane, faite en un matériau ferromagnétique. L'induit 60 et l'inducteur 61 sont séparés par un entrefer 7.

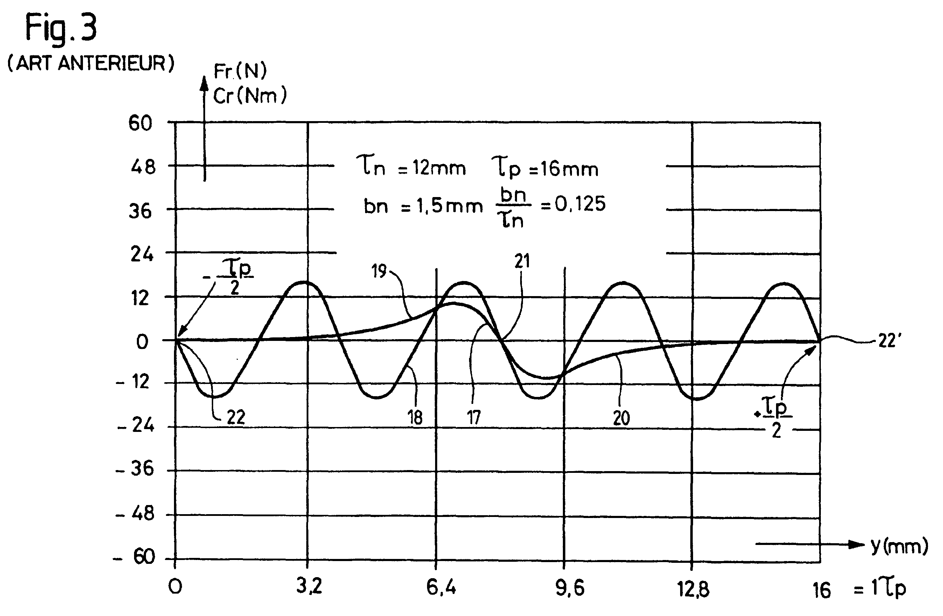

La figure 2 représente la distribution de la composante normale de l'induction magnétique B exprimée en Tesla (T) et s'étendant ici sur deux pas polaires τp. On fera remarquer que cette induction B est celle produite uniquement par les aimants 8 de l'inducteur 61 sur les dents 10 de l'induit 60 dans le plan de coupe de la figure 1, que les enroulements 4 soient alimentés ou non. On voit sur la figure 2 que les ouvertures 6 des encoches 2 provoquent des perturbations 15 et 16 bien visibles sur la configuration de l'induction B. Ces couvertures, de largeur bn, sont responsables d'un phénomène bien connu des moteurs à aimants permanents, phénomène que l'on appelle effet réluctant. Cet effet crée une force parasite, ou force réluctante Fr, qui est dirigée selon l'axe y et qui perturbe le bon fonctionnement du moteur. La variation de cette force Fr est représentée dans le diagramme de la figure 3.

Le diagramme de la figure 3 est basé sur un moteur ayant un pas dentaire τn de 12 mm, un pas polaire τp de 16 mm et une ouverture bn d'encoche de 1,5 mm, le rapport bn/τn valant donc 0,125. Le pas polaire τp est porté en abscisse et la force réluctante Fr en ordonée. τp est exprimé en millimètre (mm) et Fr en Newton (N). La courbe 17 du diagramme de la figure 3 reflète la configuration de la force réluctante Fr qui serait produite si l'induit n'avait qu'une encoche. Cette courbe se caractérise par deux points instables 22 et 22' de faible raideur et par un point stable 21 à forte raideur. Aux points 22 et 22', l'encoche 6 se trouve au milieu d'un aimant 8 (-τp/2 et +τp/2), alors qu'au point 21, elle se trouve entre deux aimants 8. Si l'inducteur 61 se trouve, par exemple, situé entre 0 et 3,2, il va se déplacer vers la droite pour se stabiliser au point 21 en fournissant une force motrice (pente 19). Au contraire, si l'inducteur 61 se trouve situé entre 16 et 12,8, il va se déplacer au même point 21 en fournissant un force de freinage (pente 20). La courbe 18 du diagramme de la figure 3 reflète la configuration de la force réluctante totale Fr produite sur un pas polaire τp, l'induit 60 possédant 8 encoches. La force réluctante parasite comporte alors une alternance de huit maxima parasites qui pertubent le bon fonctionnement du moteur, ces forces étant de l'ordre de 16 Newtons. On comprend donc que si l'on ne prend pas garde à ce phénomène, le moteur peut devenir inutilisable, la force réluctante pouvant alors dépasser la force maximum que peut fournir le moteur quand il est alimenté en courant.

Le document IEEE Transactions on magnetics, Vol. 24, No 6, Nov. 1988, pages 2901 à 2903, décrit un moteur synchrone à encoches ouvertes dans lequel une compensation de l'effet réluctant produit par une encoche située en entrée d'un aimant du rotor est obtenue par l'effet réluctant d'une autre encoche située simultanément en sortie du même aimant. Pour diminuer l'effet réluctant global sur plusieurs pas polaires, ce document propose alors un agencement asymétrique des aimants.

Il est connu du document DE 24 90 91 un générateur à roue tournante dont l'induit présente des dents de section constante entourées de bobines. L'inducteur tournant a à sa périphérie des aimants permanents qui induisent en tournant un flux magnétique variable dans les dents et un courant dans les bobines. Afin de fermer les encoches définies entre les dents, des plaques de tôle sont prévues. De telles plaques de tôle sont généralement formées de matériaux magnétiques de faible réluctance de telle sorte que les encoches sont fermées et diminuent ainsi l'effet réluctant. L'agencement de ces plaques de tôle complique la construction de l'induit sans diminuer fortement l'effet réluctant d'un tel générateur. Dans le cas où les plaques formant les encoches étaient réalisées avec un matériau de haute réluctance, l'effet réluctant d'un tel générateur serait énorme, tout comme dans le cas où les plaques de tôle ne seraient pas prévues, étant donné que les effets réluctants dus aux encoches s'additionnent, le pas polaire entre les aimants permanents étant égal au pas dentaire entre les dents de l'induit. Il s'agit d'un générateur de tension monophasé ne pouvant pas être utilisé comme moteur synchrone.

Pour supprimer ou réduire fortement l'effet réluctant, une technique très répandue consiste à décaler les tôles formant l'induit 60 les unes par rapport aux autres de manière que, dans une coupe telle que celle de la figure 1a, les axes longitudinaux des dents 10 et des encoches 2, représentés par des traits mixtes, forment un angle différent de 90° avec la direction y de déplacement de l'inducteur 61, non visible dans cette figure la, par rapport à l'induit 60. Il faut noter que, dans la figure la qui est une coupe faite selon l'axe A-A de la figure 1, les enroulements 4 et les feuilles isolantes 3 qui sont disposés dans les encoches 2 n'ont pas été représentés, et que les tôles formant l'induit 60 n'ont pas été dessinées séparément.

Cette technique de décalage des tôles formant l'induit 60 crée des difficultés supplémentaires en compliquant les outillages de fabrication et en rendant plus malaisée l'introduction des enroulements 4 dans les encoches 2.

Une autre technique, qui peut être combinée à la précédente, consiste à disposer les aimants 8 obliquement, c'est-à-dire de manière que leurs arêtes parallèles au plan de la semelles 9 fassent respectivement des angles différents de 0° et de 90° avec la direction y de déplacement de l'inducteur 61 par rapport à l'induit 60. Cette technique complique également la fabrication des moteurs.

De toute façon, en plus des dispositions citées ci-dessus, on cherchera toujours à donner aux pré-encoches 6 une largeur bn aussi faible que possible, ce qui aura pour conséquence de compliquer l'opération de bobinage car, de par la largeur bn d'encoche très faible, les bobines, avant montage, doivent être disposées en vrac pour permettre leur insertion dans l'encoche 2 via la pré-encoche 6. Ce montage en vrac a comme conséquence que les fils formant les enroulements 4 sont disposés très irrégulièrement dans les encoches 2, d'où il résulte que le coefficient de remplissage de ces encoches 2 est faible (de l'ordre de 30 %) et que la résistance thermique entre les enroulements 4 et la culasse 1 est importante. Ces inconvénients conduisent respectivement à un faible rendement du moteur et à une médiocre capacité thermique.

Pour pallier les inconvénients énumérés ci-dessus, l'invention propose un moteur synchrone tel que défini à la revendication 1.

Grâce à ces caractéristiques, et comme cela sera montré en détail plus loin, la force réluctante globale qui subsiste dans un moteur selon la présente invention est beaucoup plus faible que celle qui existe dans un moteur de l'art antérieur. En outre, la fabrication d'un moteur selon la présente invention est beaucoup plus simple, et donc meilleur marché, que celle d'un moteur de l'art antérieur.

D'autres avantages de la présente invention apparaîtront à la lecture de la description de plusieurs de ses modes d'exécution qui va être faite ci-dessous à l'aide des dessins annexés qui sont donnés uniquement à titre d'exemple et dans lesquels :
- la figure 1 est une coupe partielle d'un moteur linéaire synchrone selon l'art antérieur discuté dans le préambule de cette description,
- la figure 1a est une coupe partielle du moteur de la figure 1, faite selon l'axe A-A de cette figure 1,
- la figure 2 montre la configuration de l'induction magnétique B du moteur de la figure 1,
- la figure 3 est un diagramme représentant la force réluctante produite d'une part par une seule encoche du moteur de la figure 1 et d'autre part par huit encoches du même moteur,
- le figure 4 est une coupe partielle d'un moteur linéaire synchrone selon l'invention et selon un premier mode d'exécution,
- la figure 4a est une coupe partielle du moteur de la figure 4, faite selon l'axe A-A de cette figure 4,
- la figure 5 montre la configuration de l'induction magnétique B du moteur de la figure 4,
- la figure 6 est un diagramme représentant la force réluctante produite d'une part par une seule encoche du moteur de la figure 4 et d'autre part par huit encoches du même moteur,
- la figure 7 est un diagramme représentant l'évolution de la force réluctante d'un moteur synchrone de l'invention en fonction du rapport entre la largeur d'encoche et le pas dentaire,
- les figures 8 et 9 montrent deux manières de bobiner un moteur synchrone de l'invention,
- la figure 10 est une coupe partielle dans l'induit d'un moteur synchrone de l'invention selon un deuxième mode d'exécution,
- les figures 11 et 12 montrent un troisième mode d'exécution du moteur selon l'invention, la première en coupe, la seconde en perspective,
- les figures 13 et 14 montrent un quatrième mode d'exécution du moteur selon l'invention, la première en coupe, la seconde en perspective, et
- la figure 15 est une coupe partielle d'un moteur rotatif synchrone selon l'invention.

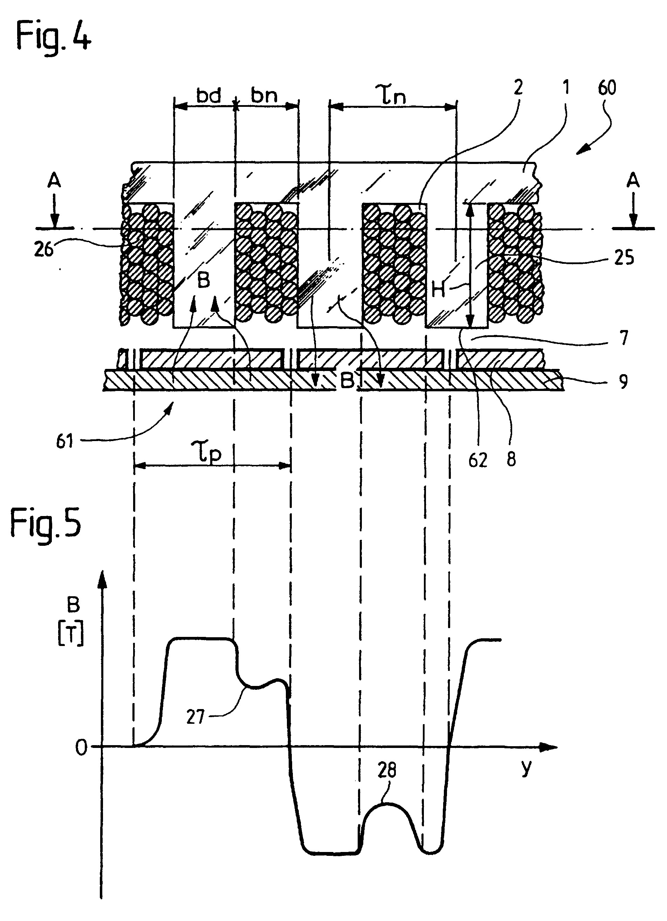

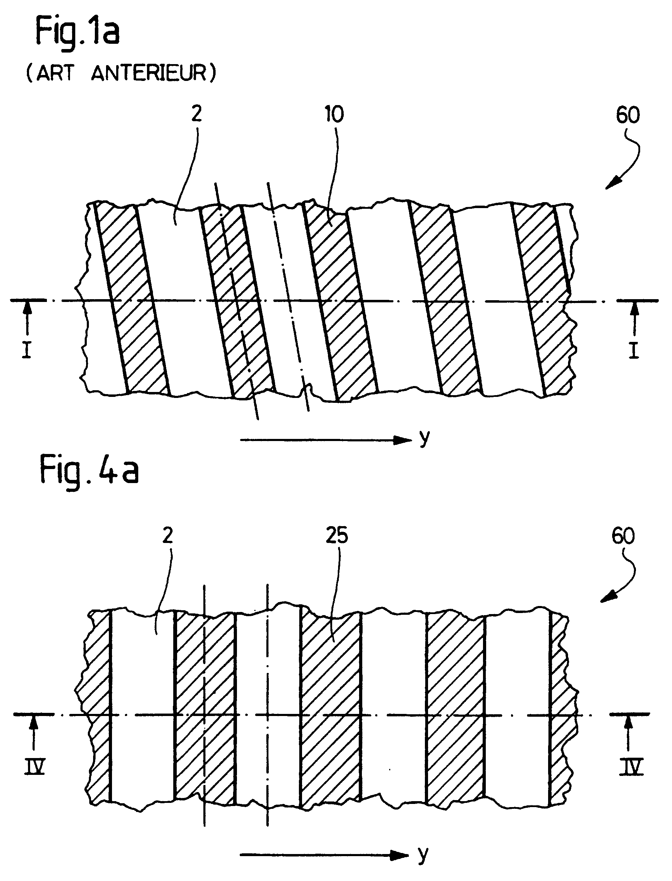

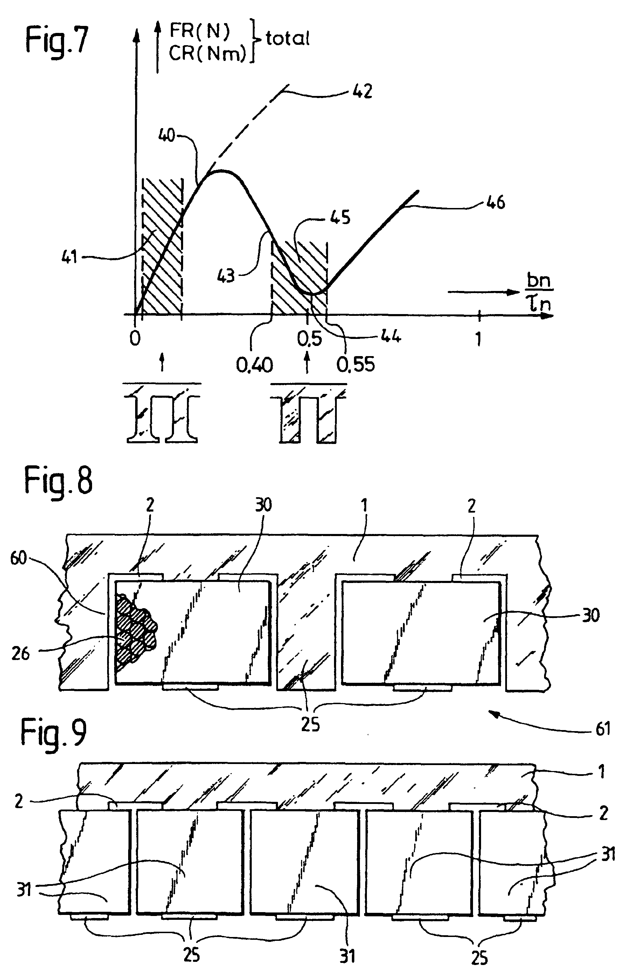

La figure 4 est une coupe partielle dans un moteur synchrone linéaire réalisé selon l'invention et selon un premier mode d'exécution. Comme pour le moteur de l'art antérieur, décrit à l'aide de la figure 1, ce moteur comporte un induit 60 constitué d'un paquet de tôles, comprenant une culasse 1 et une pluralité de dents 25 ayant une première extrémité solidaire de la culasse 1 et une deuxième extrémité, opposée à la première et formant une tête de dent 62. Les dents 25 sont disposées régulièrement avec un pas dentaire τn. Chaque dent 25 est séparée de la suivante par une encoche 2 dans laquelle est logé par exemple l'enroulement 26 d'une bobine telle que celles qui sont représentées à la figure 8 avec la référence 30. La hauteur des dents 25, c'est-à-dire la distance qui sépare leur première et leur deuxième extrémité, est désignée par la référence H.

Le moteur comporte aussi un inducteur 61 disposé en regard des têtes de dents 62, cet inducteur 61 étant équipé d'une pluralité d'aimants permanents 8 en forme de parallélépipèdes rectangles disposés régulièrement, avec un pas polaire τp, sur une semelle 9 de retour de flux plane, faite en un matériau ferromagnétique. L'inducteur 61 et l'induit 60 sont séparés par un entrefer 7.

Selon l'invention, les dents 25 ont une section constante sur toute leur hauteur H. On remarque en effet que les flancs des dents 25 sont parallèles, et que leurs têtes 62 ne présentent aucune semelle dentaire comme c'est le cas dans le moteur de l'art antérieur montré en figure 1 (référence 10'). Les encoches sont donc complètement "ouvertes" du côté de l'inducteur 61, par opposition aux encoches des moteurs de l'art antérieur qui sont dites "semi-fermées". En outre, la largeur bn des encoches 2 est sensiblement égale à la largeur bd des têtes de dent 62. En d'autres termes, et puisque la somme des largeurs bd et bn est égale au pas dentaire τn, le rapport bn/τn est sensiblement égal à 0,5. Sensiblement égal signifie qu'en s'écartant tant soit peu de la valeur centrale de 0,5, les performances d'un moteur selon l'invention sont encore satisfaisantes. Selon des expériences conduites sur ce genre de moteur, ce rapport bn/τn peut être compris entre 0,40 et 0,55.

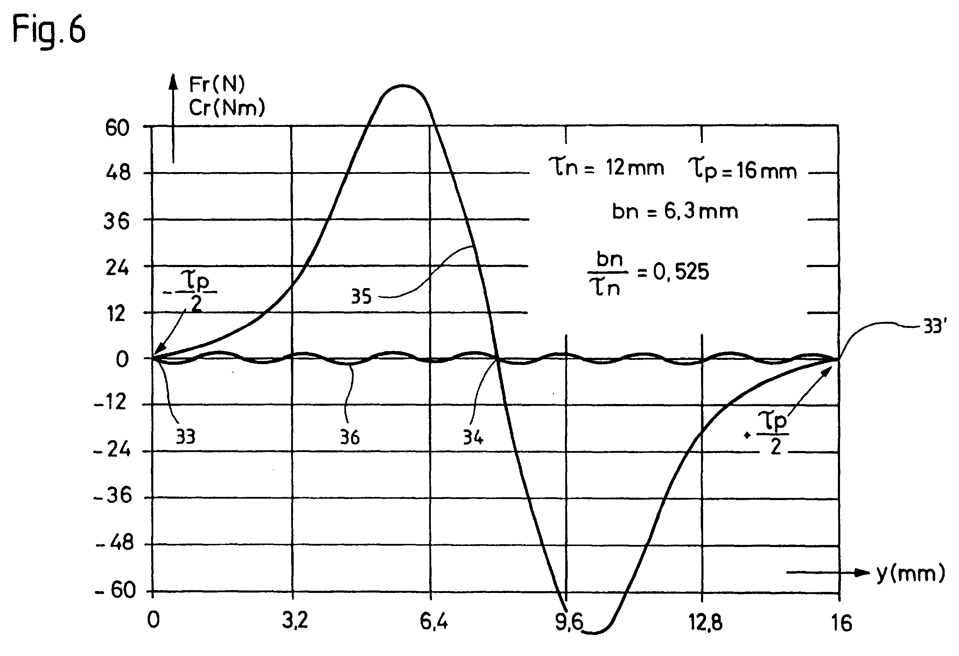

Si l'on observe maintenant la configuration de l'induction magnétique B correspondant au moteur de la figure 4, la figure 5 montre que cette configuration est fortement perturbée (références 27 et 28), bien plus fortement en tout cas que celle montrée en figure 2 pour le moteur de l'art antérieur, ce qui devrait logiquement conduire à un effet réluctant énorme rendant le moteur totalement inutilisable. Or on constate que si l'effet réluctant produit par une encoche (par exemple si l'induit n'avait qu'une seule encoche) est effectivement très grand, l'effet réluctant produit par plusieurs encoches se suivant est réduit à une valeur bien plus basse que celle constatée sur le moteur de l'art antérieur.

Ce phénomène est illustré par le diagramme de la figure 6. Ce diagramme est basé sur un moteur ayant un pas dentaire τn de 12 mm et un pas polaire τp de 16 mm (donc identiques à ceux du moteur de l'art antérieur mentionné ci-dessus). Cependant l'ouverture bn d'encoche est ici de 6,3 mm, et le rapport bn/τn vaut donc 0,525. Dans le diagramme de la figure 6, le pas polaire τp en mm est porté en abscisse et la force réluctante en Newton est portée en ordonnée. La courbe 35 du diagramme montre la configuration de la force réluctante qui serait produite si l'induit 60 n'avait qu'une seule encoche, ou force réluctante élémentaire, et qui présente également deux points instables 33 et 33' ainsi qu'un point stable 34. Cette force réluctante élémentaire a une amplitude considérable, plus grande que 60 N, ce qui était prévisible. Cependant, l'allure de la courbe 35 se rapproche d'une sinusoïde, ce qui est explicable du fait que la largeur d'encoche bn est sensiblement égale à la largeur bd de la tête de dent 62. Chacune des encoches 2 du moteur de la figure 4 produit évidemment une force réluctante élémentaire dont l'allure est semblable à celle qui est représentée par la courbe 35 de la figure 6, et les courbes représentant ces forces réluctantes élémentaires, qui n'ont pas été dessinées, sont décalées les unes par rapport aux autres dans le sens de l'axe y.

Laforce réluctante globale agissant dans un moteur tel que le moteur de la figure 4 est évidemment égale à la somme des forces réluctantes élémentaires qui viennent d'être mentionnées. Chacune de ces dernières ayant une allure qui est proche d'une sinusoïde, leur somme devient très faible. Ainsi, la courbe 3b de la figure 6 représente la force réluctante globale agissant dans un moteur tel que celui de la figure 4 et qui comporte huit encoches 2 et six aimants 8. Cette courbe 36 montre que, dans ce cas, la force réluctante globale est d'environ 1 N, alors que, pour le même type de moteur considéré dans le préambule de cette description, mais avec pré-encoches, cette force réluctante globale était de l'ordre de 16 N. On mesure donc ici les avantages considérables amenés par le moteur réalisé selon l'invention qui est remarquable, on le répète, par le fait qu'il possède des encoches ouvertes dont la largeur est sensiblement égale à la largeur de la dent, cette dernière présentant en outre une section constante sur toute sa hauteur.

Le diagramme de la figure 7 résume bien tout ce qui a été dit jusqu'à maintenant. Ce diagramme est établi pour un moteur comportant le même rapport pas polaire τp sur pas dentaire τn, soit par exemple, respectivement, 16 mm et 12 mm. On porte en abscisse le rapport bn/τn en maintenant constant le pas dentaire τn, en d'autres termes, on fait croître la largeur d'encoche bn par rapport au pas dentaire τn. Les moteurs construits selon l'art antérieur se trouvent situés dans la zone 41, dans laquelle la force réluctante globale Fr augmente (partie 40 de la courbe) quand bn/τn augmente. Selon un concept généralement admis de l'homme de métier, cette force réluctante globale Fr ne peut que continuer à croître (partie 42 de la courbe) quand la largeur d'encoche bn augmente. Or le déposant de la présente invention a vérifié que cette force passe par un maximum puis diminue (partie 43 de la courbe) pour atteindre un minimum dans la zone 45 où la largeur d'encoche bn est sensiblement égale à un demi-pas dentaire τn et où sont situés les moteurs selon la présente invention. A partir de cette zone 45, la force réluctante globale Fr augmente à nouveau selon la partie 46 de la courbe.

Pour résumer, la zone 41 est celle des moteurs à encoches semi-fermées de l'art antérieur, alors que la zone 45 est celle des moteurs à encoches ouvertes objets de la présente invention.

On comprendra que la réduction de l'effet réluctant est d'autant meilleure que le nombre d'encoches est élevé. Si les moteurs rotatifs de taille moyenne à grande (de 0,1 à 1m et plus) ont facilement un nombre élevé d'encoches permettant de réduire l'effet réluctant de manière remarquable, cela est plus difficile pour les moteurs linéaires dont la longueur totale se situe généralement entre 0,1 et 0,5 m et qui ont donc un nombre d'encoches relativement réduit.

Dans le cas d'un tel moteur linéaire, on peut mettre à profit les dents d'entrée et de sortie de l'induit, qui sont généralement dotées chacune d'un biseau, pour diminuer encore la force réluctante globale. Le dimensionnement des dents d'entrée et de sortie a déjà été discuté dans la littérature spécialisée. Le lecteur intéressé pourra consulter la thèse de Nicolas Wavre No 219 intitulée : "Etude harmonique tridimensionnelle des moteurs linéaires asynchrones à bobinages polyphasés quelconques", Lausanne EPFL, 1975. En fait, on choisit les dimensions des dents d'extrémité ainsi que l'angle de leur biseau de manière à obtenir une force réluctante de forme et d'amplitude comparables à celles de la force réluctante due aux encoches, mais de signe opposé. On peut ainsi réduire considérablement l'effet réluctant global. Le faible nombre d'encoches des moteurs linéaires par rapport aux moteurs rotatifs est ainsi compensé par une exploitation judicieuse de l'effet d'extrémité, rendant l'utilisation des encoches ouvertes encore plus intéressante pour les moteurs linéaires que pour les moteurs rotatifs.

L'effet réluctant étant beaucoup plus faible dans un moteur selon l'invention que dans un moteur de l'art antérieur, il n'est plus nécessaire de le compenser par des artifices tels que ceux qui ont été décrits ci-dessus. Ainsi, dans un moteur selon l'invention, les tôles formant l'induit 60 peuvent être alignées les unes avec les autres, de sorte que, dans une coupe telle que celle de la figure 4a, les axes longitudinaux des dents 10 et des encoches 2, représentés par des traits mixtes, soient perpendiculaires à la direction y de déplacement de l'inducteur 61, non visible dans cette figure 4a, par rapport à l'induit 60. Il résulte de cette disposition une simplification importante de l'outillage utilisé pour l'assemblage des tôles formant l'induit 60.

Il faut noter que, dans la figure 4a qui est une coupe faite selon l'axe A-A de la figure 4, les enroulements 26 n'ont pas été représentés, et que les tôles formant l'induit 60 n'ont pas été dessinées séparément.

De même, les aimants 8 peuvent être disposés de manière que leurs arêtes parallèles au plan de la semelle 9 soient respectivement parallèles et perpendiculaires à la direction de déplacement y. Il résulte de cette disposition une simplification de l'outillage utilisé pour l'assemblage des aimants 8 et de la semelle 9.

En plus de l'intérêt d'obtenir une force réluctante globale Fr très faible, le fait que les dents 25 du moteur selon l'invention ont une section constante sur toute leur hauteur H et ne présentent aucune semelle dentaire telle que les semelles dentaires 10' du moteur de l'art antérieur représenté à la figure 1 a encore l'avantage de permettre un enroulement ordonné et compact des spires constituant les bobines, spires qui peuvent ainsi être jointives comme cela est visible à la figure 4. Ceci permet d'atteindre un coefficient de remplissage des encoches 2 au moins égal, voire même supérieur à 60 %, ce qui d'une part augmente le rendement du moteur et d'autre part permet une évacuation bien plus aisée de la chaleur qu'il produit. Dans le moteur de l'invention, chaque bobine n'entoure qu'une seule dent dans le but également d'améliorer le rendement puisque la longueur des têtes de bobine est ainsi réduite, ce qui diminue les pertes cuivres.

Les dents 25 présentant une section constante sur toute leur hauteur H, les encoches 2 sont donc entièrement ouvertes, ce qui permet l'insertion de bobines préformées. Pour fabriquer ces bobines, on enroule à spires jointives les fils qui les forment sur un gabarit indépendant à noyau rectangulaire dont la section est sensiblement égale à la section de la dent 25. Le fil utilisé est généralement revêtu d'une colle qui polymérise à chaud. Une fois le bobinage terminé, on fait passer un courant dans le fil pour le chauffer et coller les spires les unes aux autres. La bobine, ainsi rendue compacte, peut être extraite du gabarit, puis introduite en bloc sur une dent 25 de l'induit.

Les figures 8 et 9 montrent chacune l'induit 60 d'un moteur synchrone selon l'invention. Dans l'induit 60 de la figure 8, chaque bobine 30 entoure une seule dent 25 et occupe sensiblement la totalité des deux encoches 2 adjacentes à la dent 25 qu'elle entoure. Il en résulte évidemment que seule une dent 25 sur deux est entourée par une bobine 30.

Dans l'induit 60 de la figure 9, chaque bobine 31 entoure également une seule dent 25, mais toutes ces dents 25 sont entourées par une bobine 31. Il en résulte évidemment que deux bobines 31 adjacentes occupent, ensemble, sensiblement la totalité de l'encoche 2 qui sépare les deux dents 25 qu'elles entourent.

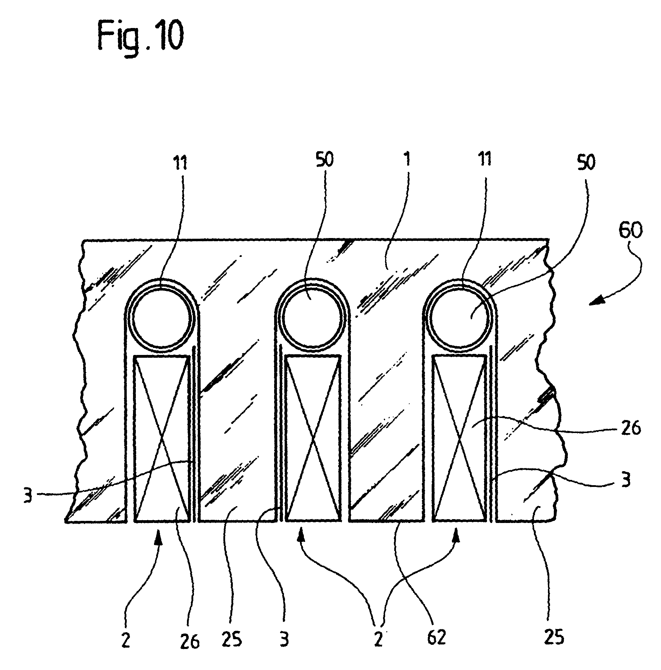

Les figures 10 à 14 sont plus particulièrement relatives à la façon d'isoler les enroulements 26 de l'induit 60 et à la façon d'évacuer la chaleur produite par ces enroulements 26.

La figure 10 montre un induit 60 équipé d'enroulements 26 introduits dans les encoches 2 selon le procédé qui a été décrit plus haut. La figure montre qu'au fond de l'encoche 2, et situé entre la culasse 1 et l'enroulement 26, se trouve un tube 11 dans lequel circule un liquide de refroidissement 50. Ce système de refroidissement permet d'évacuer rapidement vers l'extérieur la chaleur produite par l'enroulement 26. On remarquera que, comme les encoches 2 sont droites et ouvertes, les tubes 11 peuvent être préparés à l'avance avec des pliages aux extrémités (non représentés) donnant une forme de serpentin. On appréciera que si cette forme de refroidisseur était appliquée au moteur de l'art antérieur (figure 1), les tubes 11 devraient être reliés entre eux après leur introduction dans les encoches 2, puisque la pré-encoche étroite 6 ne permet pas le passage des tubes 11, ce qui compliquerait notablement le montage du moteur. La figure 10 montre également une feuille isolante 3 disposée entre l'enroulement 26 et la dent 25, qui peut être très facilement introduite dans l'encoche 2 puisque celle-ci est ouverte.

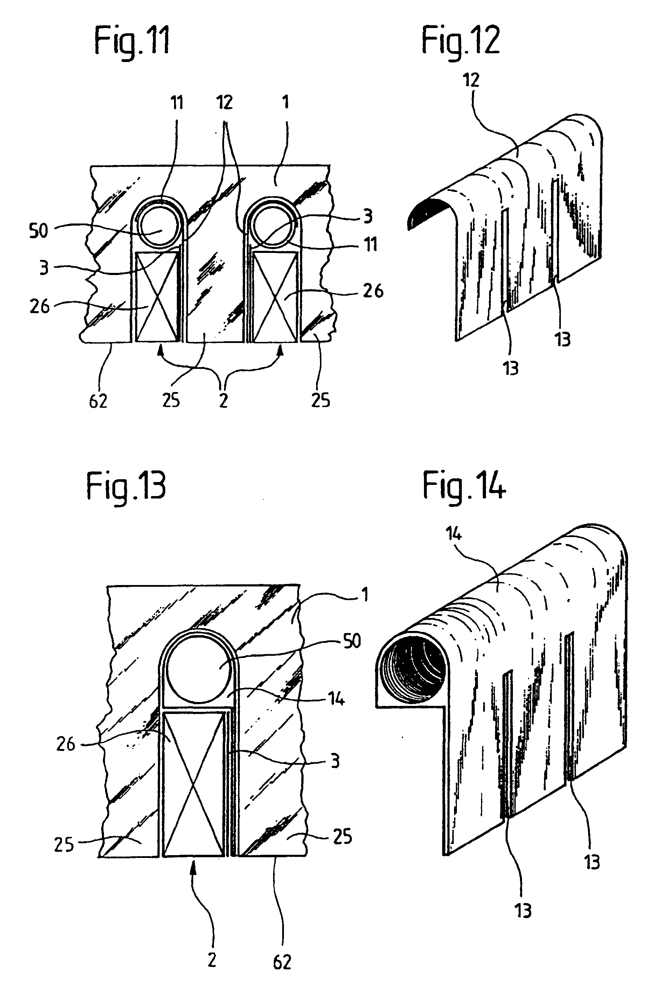

La figure 11 montre une disposition très proche de celle de la figure 10 où l'on retrouve le tube de refroidissement 11 et la feuille isolante 3. En plus de cela, la figure 11 montre que le tube 11 est au moins partiellement entouré d'une feuille 12, représentée en perspective à la figure 12, cette feuille étant en outre prise en sandwich entre la dent 25 et l'enroulement 26 et s'étendant jusqu'à la tête 62 de la dent 25. Cette feuille 12 sert de moyen de transfert thermique entre l'enroulement 26 et le tube de refroidissement 11. Cette feuille est faite d'un matériau thermiquement conducteur, tel que du cuivre ou de l'aluminium, ou d'un matériau composite, tel que la fibre de carbone par exemple. Si la feuille est faite en aluminium, celui-ci peut être oxydé, ce qui permet de supprimer la feuille isolante 3 et de ce fait de réduire encore la résistance thermique.

On observera cependant que si la feuille 12 est métallique, donc électriquement conductrice, elle sera le siège de courants de Foucault induits par le flux de fuite des encoches 2. Pour tous les moteurs synchrones dont les encoches peuvent devenir relativement profondes, l'inductance de fuite d'encoche peut alors devenir l'inductance principale, ce qui est généralement un inconvénient. Un des moyens de réduire l'inductance de fuite d'encoche est précisément d'utiliser la feuille de transfert thermique 12 également comme blindage contre le flux de fuite d'encoche. Si ce blindage devient trop important, on ajustera son effet en usinant des rainures 13, telles qu'elles apparaissent en figure 12. Ces rainures 13, à l'image des tôles des moteurs électriques, réduisent l'importance des courant de Foucault. Un nombre élevé de rainures permet d'éliminer ces courants de Foucault, sans réduire notablement la capacité de transfert thermique. Il est à noter qu'on peut utiliser pour la feuille 12 un alliage présentant un bon compromis entre sa conductibilité thermique et sa conductibilité électrique.

Les figures 13 et 14 présentent une variante de la solution représentée par les figures 11 et 12. Le système de refroidissement 14 des figures 13 et 14 combine en une seule pièce la feuille conductrice 12 et le tube de refroidissement 11 des figures 11 et 12. Ce système 14 peut être par exemple réalisé en profilé d'aluminium.

La description ci-dessus concernait plus particulièrement un moteur synchrone linéaire, mais il est évident que les principes généraux de l'invention sont également applicables à un moteur synchrone rotatif.

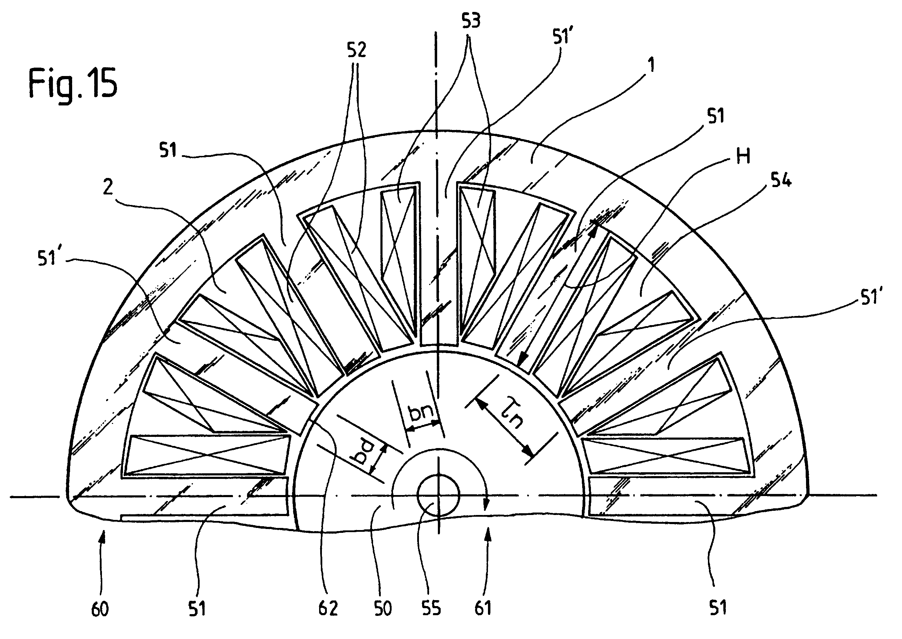

La figure 15 représente schématiquement et partiellement un moteur synchrone rotatif selon la présente invention, dont le rotor 50 constitue l'inducteur 61. Ce rotor 50 n'a été représenté que très schématiquement par un cercle symbolisant sa périphérie et par son arbre 55, mais il comporte évidemment une pluralité d'aimants permanents semblables aux aimants 8 du moteur de la figure 4 et disposés comme ces derniers sur une semelle de retour de flux en un matériau ferromagnétique.

Le stator du moteur de la figure 15 constitue son induit 60 et comporte une culasse 1 et une pluralité de dents identiques les unes aux autres et désignées alternativement par les références 51 et 51'. Ces dents 51, 51' sont au nombre de 12 dans cet exemple, et ont toutes une première extrémité solidaire de la culasse 1 et une deuxième extrémité opposée à la première et formant une tête de dent 62 située en regard du rotor 50.

Les dents 51, 51' sont disposées régulièrement avec un pas dentaire τn et définissent entre elles des encoches 2 dans lesquelles sont logées des bobines 52 et 53.

Conformément à l'invention, les dents 51, 51' ont une section constante sur toute leur hauteur H, et leur largeur bd est sensiblement égale à la largeur bn que les encoches 2 ont à la hauteur des têtes de dents 62. En d'autres termes, le rapport bn/τn est aussi sensiblement égal à 0,5.

Ces caractéristiques donnent au moteur rotatif de la figure 15 les mêmes avantages, par rapport aux moteurs connus du même genre, que ceux qui ont été décrits ci-dessus dans le cas des moteurs linéaires. Notamment, le couple réluctant global Cr dû à la présence des encoches 2 est beaucoup plus faible dans un moteur selon la présente invention que dans un moteur connu, comme cela ressort des figures 3, 6 et 7 qui sont aussi valables dans ce cas et dans lesquelles ce couple réluctant est exprimé en Newton·mètres.

On observera que si les dents 51 et 51' présentent une section constante, cela n'est plus le cas des encoches 2 qui vont en s'évasant à mesure que l'on s'approche de la culasse 1, cette configuration étant d'autant plus marquée que le diamètre du moteur est réduit. Ainsi, pour mieux occuper l'espace mis à disposition dans l'encoche, tout en exploitant l'idée de préformer à l'avance les bobines sur gabarit, on prépare une série de bobines de section rectangulaire 52 et une série de bobines de section trapézoïdale 53 sur un gabarit indépendant à noyau rectangulaire dont la section est sensiblement égale à la section des dents 51, 51'. Après avoir extrait les bobines des gabarits, on introduit d'abord chacune des bobines de section trapézoïdale 53 sur une des dents de l'induit 60, en laissant libre une de ces dents sur deux. Dans l'exemple de la figure 15, ces bobines 53 sont introduites sur les dents 51', les dents 51 étant laissées libres. On introduit ensuite chacune des bobines de section rectangulaire 52 sur les dents laissées libres lors de l'introduction des bobines de section trapézoïdales 53, c'est-à-dire les dents 51 dans le présent exemple. On remplit ainsi au mieux l'espace disponible dans les encoches 2.

L'espace 54 qui subsiste après la mise en place des bobines 52 et 53 peut être utilisé pour y loger un système de refroidissement, par exemple un des systèmes décrits à l'aide des figures 10 à 14. Il va de soi cependant que pour beaucoup de moteurs, seules des bobines à section rectangulaire seront mises en oeuvre, particulièrement pour les moteurs de grand diamètre.

## Revendications

1. Moteur synchrone comprenant :
- un induit (60) formé par une culasse (1) et une pluralité de dents (25; 51, 51') fixées à cette culasse qui définissent entre elles une pluralité d'encoches (2);
- une pluralité d'enroulements (30; 31; 52, 53) disposés dans ladite pluralité d'encoches;
- un inducteur (61) disposé en regard dudit induit et comprenant une pluralité d'aimants permanents (8) disposés sur une semelle de retour de flux (9);
ladite pluralité de dents étant agencée régulièrement avec un pas dentaire déterminé (τn) et ladite pluralité d'aimants permanents étant agencée régulièrement avec un pas polaire déterminé (τp), lesdites dents présentant à leur extrémité libre une tête (62) ayant une première largeur (bd) et lesdites encoches ayant chacune une deuxième largeur (bn) au niveau des têtes desdites dents, la somme desdites première et deuxième largeurs définissant ledit pas dentaire qui est prévu différent dudit pas polaire, ce moteur étant **caractérisé en ce que** le rapport de ladite deuxième largeur (bn) sur ledit pas dentaire (τn) est compris entre 0,40 et 0,55, **en ce que** chaque encoche de ladite pluralité d'encoches produit une force réluctante élémentaire dont la courbe sur la période d'un pas polaire est semblable à une courbe sinusoïdale, ladite pluralité de dents étant agencée relativement à ladite pluralité d'aimants permanents de manière que les courbes des forces réluctantes élémentaires sont décalées les unes par rapport aux autres et que la somme des forces réluctantes élémentaires de ladite pluralité d'encoches soit très faible relativement à une force réluctante élémentaire, et **en ce que** lesdits enroulements sont formés respectivement par des bobines entourant chacune une seule desdites dents.

2. Moteur synchrone selon la revendication 1, **caractérisé en ce que** lesdites dents (25; 51, 51') définissent chacune deux flancs sensiblement parallèles de sorte que leur section est sensiblement constante sur toute leur hauteur (H).

3. Moteur synchrone selon la revendication 1 ou 2, **caractérisé par le fait que** chaque bobine (30) entoure une seule desdites dents (25; 51, 51') et occupe sensiblement la totalité des deux encoches (2) adjacentes à celle desdites dents (25; 51, 51') qu'elle entoure, seule une desdites dents (25; 51, 51') sur deux étant entourée par une desdites bobines (30).

4. Moteur synchrone selon la revendication 1 ou 2, **caractérisé par le fait que** chacune desdites dents (25; 51, 51') est entourée par une desdites bobines (31), deux bobines adjacentes occupant ensemble sensiblement la totalité de l'encoche (2) séparant celles des dents qu'elles entourent.

5. Moteur synchrone selon l'une des revendications précédentes, **caractérisé en ce que** ladite première largeur (bd) et ladite deuxième largeur (bn) sont sensiblement égales.

6. Moteur synchrone selon l'une quelconque des revendications précédentes, **caractérisé par le fait qu'**il comporte en outre des moyens de refroidissement comprenant une pluralité de tubes (11) situés chacun dans une desdites encoches (2) entre ladite culasse (1) et la bobine (30; 31; 52, 53) disposée dans cette dernière encoche (2), lesdits tubes (11) étant reliés les uns aux autres de manière à former un serpentin permettant la circulation d'un fluide de refroidissement (50).

7. Moteur synchrone selon la revendication 6, **caractérisé par le fait que** lesdits moyens de refroidissement comprennent en outre une pluralité de feuilles de transfert thermique (12), chacune desdites feuilles (12) étant située dans une desdites encoches (2), entourant au moins partiellement le tube (11) disposé dans cette encoche (2), et étant prise en outre en sandwich entre une des dents (25; 51, 51') délimitant cette encoche (2) et la bobine (30; 31; 52, 53) située dans cette encoche (2).

8. Moteur synchrone selon l'une quelconque des revendications précédentes, **caractérisé par le fait qu'**il est un moteur linéaire.

9. Moteur synchrone selon l'une quelconque des revendications 1 à 7, **caractérisé par le fait qu'**il est un moteur rotatif ayant un stator constitué par ledit induit (60) et un rotor constitué par ledit inducteur (61).

10. Moteur synchrone selon la revendication 9, **caractérisé par le fait que** ledit induit (60) comporte un nombre pair de dents (51, 51') entourées chacune par une desdites bobines (52, 53), deux dents adjacentes (51, 51') étant entourées l'une par une bobine de section au moins sensiblement rectangulaire (52) et l'autre par une bobine de section au moins sensiblement trapézoïdale (53).

## Patentansprüche

1. Synchronmotor umfassend :
- einen Anker (60), der aus einem Joch (1) und einer Vielzahl von Zähnen (25; 51, 51') gebildet ist, die an diesem Joch befestigt sind und die miteinander eine Vielzahl von Taschen (2) bilden;
- eine Vielzahl von Wicklungen (30; 31; 52, 53), die in der Vielzahl von Taschen angeordnet sind;
- einen Induktor (61), der gegenüber dem Anker angeordnet ist und eine Vielzahl von Permanentmagneten (8) umfasst, die auf einer Rückflusssohle (9) angeordnet sind;
wobei die Vielzahl von Zähnen mit einer bestimmten Zahnteilung (τn) und die Vielzahl von Permanentmagneten mit einer bestimmten Polteilung (τp) regelmässig angeordnet sind, die Zähne jeweils an ihrem freien Ende einen Kopf (62) bilden, der eine erste Breite (bd) aufweist, die Taschen jeweils eine zweite Breite (bn) in Höhe der Köpfe der Zähne aufweisen und die Summe der ersten und zweiten Breite die Zahnteilung bestimmt, die verschieden von der Polteilung vorgesehen ist, wobei dieser Motor **dadurch gekennzeichnet ist, dass** das Verhältnis von zweiter Breite (bn) und Zahnteilung (τn) zwischen 0,40 und 0,55 liegt, dass jede Tasche der Vielzahl von Taschen eine elementare Reluktanz-Kraft erzeugt, deren Kurve über eine Periode einer Polteilung ähnlich wie eine Sinuskurve ist, wobei die Vielzahl von Zähnen in bezug auf die Vielzahl von Permanentmagneten derart angeordnet ist, dass die Kurven der elementaren Reluktanz-Kräfte gegeneinander verschoben sind und dass die Summe der elementaren Reluktanz-Kräfte der Vielzahl von Taschen im Vergleich zu einer elementaren Reluktanz-Kraft sehr gering ist, und dass die Wicklungen jeweils von Spulen gebildet sind, die je einen einzigen der Zähne umgeben.

2. Synchronmotor nach Anspruch 1, **dadurch gekennzeichnet, dass** die Zähne (25; 51, 51') jeweils zwei Flanken bilden, die im wesentlichen parallel zueinander verlaufen, so dass ihr Querschnitt über die gesamte Höhe (H) im wesentlichen konstant ist.

3. Synchronmotor nach Anspruch 1 oder 2, **dadurch gekennzeichnet, dass** jede Spule (30) einen einzigen der Zähne (25; 51, 51') umgibt und dabei zwei an den jeweiligen von der Spule umgebenen Zahn (25; 51, 51') angrenzende Taschen (2) praktisch vollständig einnimmt, wobei nur jeder zweite der Zähne (25; 51, 51') von einer der Spulen (30) umgeben ist.

4. Synchronmotor nach Anspruch 1 oder 2, **dadurch gekennzeichnet, dass** jeder der Zähne (25; 51, 51') von einer der Spulen (31) umgeben wird, wobei zwei benachbarte Spulen im wesentlichen die gesamte Tasche (2) einnehmen, welche die Zähne voneinander trennt, die von den Spulen umgeben sind.

5. Synchronmotor nach einem der vorangehenden Ansprüche, **dadurch gekennzeichnet, dass** die erste Breite (bd) und die zweite Breite (bn) merklich gleich sind.

6. Synchronmotor nach einem der vorangehenden Ansprüche, **dadurch gekennzeichnet, dass** er zudem Kühlmittel aufweist, welche eine Vielzahl von Rohren (11) umfassen, die sich jeweils in einer der Taschen (2) zwischen dem Joch (1) und der Spule (30; 31; 52, 53) befinden, welche in dieser Tasche (2) angeordnet ist, wobei die Rohre (11) so miteinander verbunden sind, dass sie eine Kühlschlange bilden, welche die Zirkulation einer Kühlflüssigkeit (50) erlaubt.

7. Synchronmotor nach Anspruch 6, **dadurch gekennzeichnet, dass** die Kühlmittel zusätzlich eine Vielzahl von Folien (12) zur Wärmeübertragung aufweisen, wobei jede der Folien (12) in einer der Taschen (2) angeordnet ist und mindestens teilweise das in der Tasche (2) angeordnete Rohr (11) umgibt und ausserdem zwischen einem der Zähne (25; 51, 51'), der diese Tasche (2) begrenzt, und der in dieser Tasche (2) angeordneten Spule (30; 31; 52, 53) sandwichartig gehalten ist.

8. Synchronmotor nach einem der vorangehenden Ansprüche, **dadurch gekennzeichnet, dass** es sich um einen Linearmotor handelt.

9. Synchronmotor nach einem der Ansprüche 1 bis 7, **dadurch gekennzeichnet, dass** es sich um einen Rotationsmotor handelt, der einen Stator, welcher durch den Anker (60) gebildet wird, und einen Rotor besitzt, der durch den Induktor (61) gebildet wird.

10. Synchronmotor nach Anspruch 9, **dadurch gekennzeichnet, dass** der Anker (60) eine gerade Anzahl von Zähnen (51, 51') besitzt, die jeweils von einer der Spulen (52, 53) umgeben sind, wobei von zwei benachbarten Zähnen (51, 51') der eine von einer Spule (52) mit einem wenigstens merklich rechtwinkligen Querschnitt und der andere von einer Spule (53) mit einem wenigstens merklich trapezförmigen Querschnitt umgeben ist.

## Claims

1. Synchronous motor comprising :
- an armature (60) formed by a yoke (1) and a plurality of teeth (25; 51, 51') fixed to this yoke and defining therebetween a plurality of slots (2);
- a plurality of windings (30; 31; 52, 53) disposed in said slots;
- an inductor (61) disposed in facing relationship with said armature and comprising a plurality of permanent magnets (8) disposed on a flux-returning sole (9); said plurality of teeth being regularly arranged with a fixed tooth pitch (τn) and said plurality of permanent magnets being regularly arranged with a fixed pole pitch (τp), said teeth each defining at their free end a head (62) having a first width (bd) and said slots having each a second width (bn) at the level of said tooth heads, the sum of said first and second widths defining said tooth pitch which has a value different from said pole pitch, this motor being **characterized in that** the ratio of said second width (bn) and said tooth pitch (τn) lies between 0.40 and 0.55, **in that** each slot of said plurality of slots generates an elementary reluctant force defining a curve over the period of a pole pitch which is similar to a sinusoidal curve, said plurality of teeth being arranged relative to said plurality of permanent magnets so that the curves of the elementary reluctant forces are staggered in relation to one another and the sum of the elementary reluctant forces of said plurality of slots is very small relative to one elementary reluctant force, and **in that** said windings are respectively formed by coils each surrounding only one of said teeth.

2. Synchronous motor according to claim 1, **characterized in that** said teeth (25; 51, 51') each define two substantially parallel flanks 50 that their cross-section is substantially constant over their entire height (H).

3. Synchronous motor according to claim 1 or 2, **characterized in that** each coil (30) surrounds only one tooth (25; 51, 51') and substantially fills all of the two slots (2) adjacent the tooth (25; 51, 51') it surrounds, only one tooth (25; 51, 51') in two being surrounded by a coil (30).

4. Synchronous motor according to claim 1 or 2, **characterized in that** each tooth (25; 51, 51') is surrounded by a coil (31), two adjacent coils together filling substantially all of the slot (2) separating the teeth they surround.

5. Synchronous motor according to any of the preceding claims, **characterized in that** said first width (bd) and said second width (bn) are substantially egual.

6. Synchronous motor according to any one of the preceding claims, **characterized in that** it further includes cooling means comprising a plurality of tubes (11) each located in one of the slots (2) between the yoke (1) and the coil (30; 31; 52, 53) arranged in this slot (2), the tubes (11) being connected to one another for the through flow of a cooling fluid (50).

7. Synchronous motor according to claim 6, **characterized in that** said cooling means further comprise a plurality of heat transfer sheets (12), each of said sheets (12) being arranged in one of said slots (2), at least partly surrounding the tube (11) arranged in this slot (2) and being sandwiched between one of the teeth (25; 51, 51') delimiting this slot (2) and the coil (30; 31; 52, 53) in the slot (2)

8. Synchronous motor according to any one of the preceding claims, **characterized in that** this motor is linear.

9. Synchronous motor according to any one of the claims 1 to 7, **characterized in that** this motor is rotary, whose stator is formed by said armature (60) and whose rotor is formed by said inductor (61).

10. Synchronous motor according to claim 9, **characterized in that** said armature (60) comprises an even number of teeth (51, 51'), each surrounded by one of the coils (52, 53), wherein in each pair of adjacent teeth (51, 51'), one is surrounded by a coil (52) having a cross-section that is at least substantially rectangular and the other is surrounded by a coil (53) having a cross-section that is at least substantially trapezoidal.
